# EUROPÄISCHE PATENTSCHRIFT

(11) **EP 4 010 604 B1**
(45) Veröffentlichungstag und Bekanntmachung des Hinweises auf die Patenterteilung: **22.02.2023**
(21) Anmeldenummer: 20829304.3
(22) Anmeldetag: 18.12.2020
(51) Int. Cl.: F16D 1/116, G01M 17/007, G01M 13/025

(54) **VERBINDUNGSVORRICHTUNG ZUM STARREN VERBINDEN ZWEIER WELLEN UND WELLENANORDNUNG MIT EINER VERBINDUNGSVORRICHTUNG**
COUPLING FOR RIGIDLY CONNECTING TWO SHAFTS AND SHAFT ARRANGEMENT WITH A COUPLING
ACCOUPLEMENT POUR ÉTABLIR UNE LIAISON RIGIDE ENTRE DEUX ARBRES ET AGENCEMENT D'ARBRES AVEC UN ACCOUPLEMENT

(30) Priorität: 20.12.2019 AT 511502019
(43) Veröffentlichungstag der Anmeldung: 15.06.2022
(73) Patentinhaber: Kristl, Seibt & Co. Gesellschaft M.B.H., 8052 Graz (AT)
(72) Erfinder: JANKOVIC, Darko, 8041 Graz (AT); NEUMAYER, Christoph, 8045 Graz (AT); MARJANOVIC, Tihomir, 8054 Graz (AT)
(74) Vertreter: SONN Patentanwälte OG
(86) Internationale Anmeldenummer: PCT/AT2020/060477
(87) Internationale Veröffentlichungsnummer: WO 2021/119709

(56) Entgegenhaltungen:
- WO-A1-2013/052976
- WO-A1-2017/013147
- DE-A1-102015 106 018
- DE-C1- 3 340 130
- DE-C1- 3 501 262
- DE-C1- 4 410 306
- DE-U1-202017 100 289
- JP-U- S5 437 403
- US-A- 2 990 189
- US-A1- 2004 126 182

## Beschreibung

Die Erfindung betrifft eine Verbindungsvorrichtung zur Verbindung von mechanischen Wellenteilen, aufweisend einen ersten Anschlussabschnitt zur Verbindung mit einem ersten Wellenteil und einen zweiten Anschlussabschnitt zur Verbindung mit einem zweiten Wellenteil, wobei der erste Anschlussabschnitt zur Drehmomentübertragung formschlüssig mit einem Gegenabschnitt des ersten Wellenteils verbindbar ist, wobei an der Verbindungsvorrichtung ein von der Drehmomentübertragung vorzugsweise funktionell unabhängiger Verriegelungsmechanismus mit mehreren verschieblichen Blockierelementen vorgesehen ist, welche zwischen einer Freigabestellung, in welcher der erste Anschlussabschnitt von dem Gegenabschnitt lösbar ist, und einer Blockierstellung, in welcher ein Lösen des Gegenabschnitts von dem ersten Anschlussabschnitt formschlüssig durch die Blockierelemente verhindert wird, überführbar sind, wobei der Verriegelungsmechanismus mehrere verschiebbare Sperrbolzen aufweist, welche in einer Fixierstellung die Blockierelemente in der Blockierstellung sichern und in einer Auslösestellung ein Überführen der Blockierelemente in die Freigabestellung erlauben, wobei jedem Blockierelement ein eigener Sperrbolzen zugeordnet ist. Des Weiteren betrifft die Erfindung eine Wellenanordnung mit einer solchen Verbindungsvorrichtung.

Bei der Prüfung von Fahrzeugantriebssträngen auf Prüfständen werden Verbindungswellen zwischen Prüfrädern und Belastungsmaschinen bislang mittels Schrauben befestigt. Diese Art der Verbindung besitzt den Vorteil, dass sie grundsätzlich eine geringe Fehleranfälligkeit besitzt und hohen Belastungen standhält. Nachteilig ist jedoch, dass die Einrichtung des Prüflings am Prüfstand mit einem erhöhten Zeit- und Arbeitsaufwand verbunden ist, da jede Verbindungswelle einzeln verschraubt werden muss. Zudem ist es bei dieser Verbindungsart nicht möglich, die Prüflinge im Fehlerfall rasch zu trennen. Eine rasche Trennung ist aber zum Beispiel erforderlich, wenn der Prüfling in Brand gerät und daher umgehend vom Prüfstand entfernt werden muss.

Neben der genannten Verbindungsart mittels Verschraubung sind aus dem Stand der Technik Welle-Nabe-Verbindungen bekannt, bei denen mittels Passfedern oder Verbindungsbolzen bzw. Verbindungsstiften eine formschlüssige Verbindung zur Drehmomentübertragung zwischen zwei Elementen hergestellt werden kann. Diese Verbindungsart ist jedoch ebenfalls im Fehlerfall nicht schnell lösbar.

Eine lösbare Verbindung ist des Weiteren aus der WO 2018/134322 A1 bzw. aus der DE 20 2017 100 289 U1 bekannt. Die WO 2018/134322 A1 offenbart einen andersartigen Tauchscooter für Unterwassersportarten mit einem Propeller, wobei am Propeller ein Kugelsperrbolzen zur lösbaren Verbindung mit einer Antriebswelle vorgesehen ist. Da der Kugelsperrbolzen fest am Propeller angeordnet ist, können mit der Vorrichtung der WO 2018/134322 A1 keine Wellenteile eines Fahrzeugantriebsstranges bzw. eines Prüfstandes miteinander verbunden bzw. rasch voneinander gelöst werden.

Die DE 44 10 306 C1 offenbart eine Kupplung zur lösbaren Verbindung einer Kupplungshülse mit einem Kupplungszapfen. Die Kupplungshülse ist mit Arretiermitteln versehen. An der Außenfläche weist der Kupplungszapfen eine Sperrausnehmung auf, mit welcher ein verschiebbarer Riegel des Arretiermittels verriegelbar ist. Der Riegel ist innerhalb einer Bohrung, die gegenüber der Längsachse der Anordnung geneigt ist, angeordnet. An dem Kupplungszapfen abgewandten Ende besitzt der Riegel eine Sicherungsfläche, die mit einem beweglichen Sperrelement zusammenwirkt. Das Sperrelement ist in einer Ausnehmung radial verschiebbar geführt. In einer ersten Stellung blockiert das Sperrelement den Riegel, sodass der Kupplungszapfen nicht aus der Kupplungshülse herausgezogen werden kann. Zum Lösen kann das Sperrelement radial nach innen in eine zweite Stellung verlagert werden, wodurch die Sicherung des Riegels aufgehoben wird. Hierzu wird ein Öffnungswerkzeug verwendet. Der Kupplungszapfen kann dann herausgezogen werden.

Die DE 10 2015 106 018 A1 offenbart ein Reibrad mit einer Nabe. Das Reibrad kann über die Nabe mit einer Antriebswelle verbunden werden. Um die Antriebswelle an dem Reibrad zu fixieren, sind Sicherungsbolzen entlang des Umfangs der Nabe vorgesehen. Durch Eindrehen der Sicherungsbolzen wird ein Sicherungselement in

Form eines Federrings in eine Sperrnut der Antriebswelle gedrückt.

Zu diesem Zweck weist der Sicherungsbolzen einen konisch geformten Übergangsbereich auf.

Die US 2 990 189 A offenbart einen Verbindungsmechanismus zur Verbindung einer Welle mit einer Aufnahme. Zur Übertragung von Drehmoment ist eine Verzahnung vorgesehen. Um ein ungewolltes Lösen der Welle von der Aufnahme zu verhindern, ist ein radial verschiebbares Element vorgesehen, das hinter die Verzahnung eingreifen kann. Um das verschiebbare Element und damit die Welle zu lösen, kann mithilfe eines Werkzeugs, beispielsweise eines Schraubenziehers, entgegen der Kraft einer Feder ein Sperrelement in Längsrichtung der Welle verschoben werden, sodass das Element in eine Vertiefung gleiten und die Verbindung freigeben kann.

Aus dem Stand der Technik sind Verbindungsvorrichtungen zur Verbindung von mechanischen Wellenteilen des Weiteren aus DE 3802849 C1, DE 3818808 A1 und WO 2017/013146 A1 bekannt.

Im Lichte dieser Ausführungen ist es daher Aufgabe der vorliegenden Erfindung, die Nachteile des Standes der Technik zumindest teilweise zu lindern oder zur Gänze zu beseitigen. Insbesondere ist es Aufgabe der Erfindung, eine Verbindungsvorrichtung zur raschen und einfachen Verbindung zweier Wellenteile zur Verfügung zu stellen, die insbesondere im Fehlerfall eine rasche Trennung zwischen den Wellenteilen ermöglicht.

Gelöst wird diese Aufgabe durch eine Verbindungsvorrichtung mit den Merkmalen nach Anspruch 1. Erfindungsgemäß wird daher eine Verbindungsvorrichtung der eingangs erwähnten Art zur Verfügung gestellt, bei der vorgesehen ist, dass der Verriegelungsmechanismus ein Auslöseelement aufweist, durch dessen Betätigung alle Sperrbolzen von der Fixierstellung in die Auslösestellung überführbar sind, wobei die Sperrbolzen mit dem Auslöseelement verbunden sind. Der Verriegelungsmechanismus weist mehrere verschiebbare Sperrbolzen auf, welche in einer Fixierstellung jeweils ein Blockierelement in der Blockierstellung sichern und in einer Auslösestellung ein Überführen des Blockierelements in die Freigabestellung erlauben. Vorteilhafterweise wird durch den Verriegelungsmechanismus ein unbeabsichtigtes Trennen der formschlüssigen Verbindung zur Drehmomentübertragung zwischen dem ersten Wellenteil und der Verbindungsvorrichtung verhindert. Bei Bedarf, beispielsweise im Fehlerfall, kann jedoch durch Überführen der Blockierelemente von der Blockierstellung in die Freigabestellung die formschlüssige Verbindung zwischen dem ersten Anschlussabschnitt und dem Gegenabschnitt sofort und im Bedarfsfall auch noch während der Rotation der beiden Wellenteile gelöst werden. Auch ein Verbinden des Gegenabschnitts mit dem ersten Verbindungsabschnitt ist auf rasche und einfache Weise möglich. Die Blockierelemente können zwischen der Freigabestellung und der Blockierstellung verschieblich sein. In einer bevorzugten Ausführungsform der Erfindung sind der Verriegelungsmechanismus bzw. die Blockierelemente funktionell unabhängig von der Drehmomentübertragung. Das bedeutet, dass der Verriegelungsmechanismus nicht zur Übertragung von Drehmomenten zwischen den Wellenteilen beiträgt und daher eine Drehmomentübertragung auch ohne Verriegelungsmechanismus stattfinden könnte. Allerdings wäre ohne Verriegelungsmechanismus ein Trennen des ersten Wellenteils von der Verbindungsvorrichtung jederzeit möglich, was ein erhebliches Sicherheitsrisiko darstellen würde. Im Normalbetrieb, d.h. wenn kein Fehlerfall eintritt, soll daher ein Trennen des ersten Wellenteils von der Verbindungsvorrichtung durch den Verriegelungsmechanismus verhindert werden können. Vorzugsweise erfolgt das Lösen des ersten Anschlussabschnitts vom Gegenabschnitt in axiale Richtung, d.h. parallel zur Drehachse. Demnach sind die Blockierelemente dazu eingerichtet, in der Blockierstellung ein Lösen des Gegenabschnitts vom ersten Anschlussabschnitt in eine Richtung parallel zur Drehachse zu blockieren. Bevorzugt ist der erste Anschlussabschnitt als Anschlussflansch oder als Anschlussring ausgebildet. Die Blockierelemente können zumindest teilweise innerhalb des Anschlussflansches oder innerhalb des Anschlussrings angeordnet sein. Zur Übertragung von Drehmoment durch Formschluss kann der erste Anschlussabschnitt eine Verzahnung, vorzugsweise eine Evolventenverzahnung, aufweisen. Besonders günstig ist dabei, wenn die Verzahnung eine Innenverzahnung und/oder eine Außenverzahnung ist. Die Verzahnung kann als Innen- oder Außenverzahnung gemäß DIN 5480-1 (März 2006) ausgebildet sein. Der erste Anschlussabschnitt und der Gegenabschnitt sind dann bei dieser speziellen Ausführungsform im zusammengesetzten Zustand über eine Zahnwellenverbindung gemäß DIN 5480-1 (März 2006) verbunden. Bei den Wellenteilen kann es sich unter anderem um Wellen, Wellenstummel, Achsen oder ähnliches handeln. Der erste und der zweite Wellenteil können auch als zwei getrennte Teile derselben Welle oder Achse betrachtet werden, die über die Verbindungsvorrichtung miteinander verbunden sind. Der zweite Wellenteil kann mittels Kraftschluss und/oder Reibschluss mit der Verbindungsvorrichtung über den zweiten Anschlussabschnitt verbunden sein. Vorzugsweise sind der erste und der zweite Anschlussabschnitt an gegenüberliegenden Seiten der Verbindungsvorrichtung angeordnet. In einer Weiterbildung der Erfindung kann der Verriegelungsmechanismus ferngesteuert und vorzugsweise elektrisch, hydraulisch und/oder pneumatisch zwischen der Freigabestellung und der Blockierstellung überführt werden.

Es ist vorgesehen, dass der Verriegelungsmechanismus zumindest zwei, insbesondere zumindest drei oder vier, Blockierelemente aufweist. Wenn der erste Anschlussabschnitt als Anschlussring oder Anschlussflansch ausgebildet ist, ist es vorteilhaft, wenn die Blockierelemente vorzugsweise regelmäßig beabstandet voneinander entlang des Umfangs des Anschlussringes oder Anschlussflansches angeordnet sind. Die Verbindungsvorrichtung besteht vorzugsweise aus einem Metall, insbesondere Stahl.

In einer bevorzugten Ausführungsform ist vorgesehen, dass die Blockierelemente jeweils durch eine Kugel gebildet sind, welche jeweils in einem eigenen, vorzugsweise im Wesentlichen radial zur Drehachse angeordneten Kugelkanal gelagert ist. Der Kugelkanal ermöglicht eine Verschiebung der Kugel von der Blockierstellung in die Freigabestellung und vice versa. Bevorzugt ist der Kugelkanal länglich ausgebildet und weist im Vergleich zum Außendurchmesser der Kugel einen geringfügig größeren Innendurchmesser, auf.

Bevorzugt ist, wenn der erste Anschlussabschnitt einen Verzahnungsbereich aufweist und der Kugelkanal über eine Kanalöffnung in den Verzahnungsbereich mündet, vorzugsweise wobei die Kanalöffnung einen kleineren Querschnitt als die Kugel aufweist. Durch die Kanalöffnung kann die Kugel in der Blockierstellung zumindest teilweise in den Verzahnungsbereich ragen und dadurch ein Lösen des Gegenabschnitts des ersten Wellenteils vom ersten Anschlussabschnitt der Verbindungsvorrichtung, insbesondere in axiale Richtung, verhindern. Der Gegenabschnitt kann eine entsprechende Gegenverzahnung aufweisen.

Es ist vorgesehen, dass der Verriegelungsmechanismus mehrere verschiebbare Sperrbolzen aufweist, wobei jedem Blockierelement iafc ein eigener Sperrbolzen zugeordnet ist, welcher in einer Fixierstellung das Blockierelement in der Blockierstellung sichert und in einer Auslösestellung ein Überführen des Blockierelements in die Freigabestellung ermöglicht. Die Sperrbolzen sind bevorzugt parallel bzw. koaxial zur Drehachse orientiert. Die Sperrbolzen sind verschieblich in der Verbindungsvorrichtung gelagert. Es kann vorgesehen sein, dass jeweils eine Rückstellfeder die Sperrbolzen in der Fixierstellung hält und die Sperrbolzen durch Überwinden der durch die jeweilige Rückstellfeder erzeugten Federkraft in die Auslösestellung überführt werden können.

Wenn die Verbindungsvorrichtung Kugelkanäle mit Kugeln als Blockierelemente aufweist, ist es vorteilhaft, wenn jeweils ein Sperrbolzen in den Kugelkanal hineinragt, insbesondere diesen durchdringt, und in der Fixierstellung die Kugel in der Blockierstellung sichert. Bevorzugt ist dabei, wenn in der Fixierstellung die Kugel zwischen der Kanalöffnung und dem Sperrbolzen eingeklemmt ist, wobei die Kugel zumindest teilweise durch die Kanalöffnung ragen kann. Vorzugsweise verläuft die Längsachse des Sperrbolzens im Wesentlichen rechtwinkelig zur Längsachse des Kugelkanals.

In einer Ausführungsform ist vorgesehen, dass die Sperrbolzen jeweils zumindest einen ersten Abschnitt mit einem ersten Querschnitt und zumindest einen zweiten Abschnitt mit einem im Vergleich zum ersten Querschnitt kleineren zweiten Querschnitt aufweisen, wobei in der Fixierstellung die Sperrbolzen zumindest mit dem ersten Abschnitt in die Kugelkanäle ragen und die Kugeln in der Blockierstellung sichern. Zwischen dem ersten und dem zweiten Bereich kann ein sich verjüngender Übergangsbereich vorgesehen sein.

Um ein rasches Lösen des ersten Anschlussabschnittes von dem Gegenabschnitt zu ermöglichen, ist erfindungsgemäß vorgesehen, dass der Verriegelungsmechanismus ein Auslöseelement, insbesondere einen Auslösering, aufweist, durch dessen Betätigung alle Sperrbolzen von der Fixierstellung in die Auslösestellung überführbar sind. Die Sperrbolzen sind mit dem Auslöseelement fest, insbesondere starr, verbunden. Das Auslöseelement kann mit zumindest einer Rückstellfeder verbunden sein, durch welche das Auslöseelement in einer ersten Position gehalten wird. In der ersten Position des Auslöseelements werden die Sperrbolzen in der Fixierstellung gehalten. Durch Überwinden der Federkraft der Rückstellfeder kann das Auslöseelement betätigt, d.h. in eine zweite Position gebracht werden, wodurch die Sperrbolzen in die Auslösestellung überführt werden. Nachdem die zur Überwindung der Federkraft aufgebrachte Kraft wieder entfernt wurde, wird das Auslöseelement durch die Rückstellfeder wieder in die erste Position und damit die Sperrbolzen in die Fixierstellung gebracht. Das Auslöseelement kann manuell, beispielsweise per Hand, betätigt werden. Zusätzlich oder alternativ kann das Auslöseelement auch durch einen elektrischen Auslösemechanismus betätigt werden. In einer möglichen Weiterbildung kann der elektrische Auslösemechanismus ferngesteuert, beispielsweise via Funk, betätigt werden.

In einer bevorzugten Ausführungsform sind zwei oder zumindest drei, insbesondere im Wesentlichen regelmäßig um die Drehachse angeordnete Blockierelemente und dazu jeweils korrespondierende Sperrbolzen vorgesehen, welche in einer Fixierstellung jeweils das korrespondierende Blockierelement in der Blockierstellung sichern und in einer Auslösestellung ein Überführen des jeweils korrespondierenden Blockierelements in die Freigabestellung ermöglichen, wobei die Sperrbolzen durch einen um die Drehachse angeordneten Auslösering von der Fixierstellung in die Auslösestellung überführbar sind. Bei dieser Ausführungsform ist demnach ein Auslöseelement der oben beschriebenen Art in Form eines Auslöserings vorgesehen.

Um eine sichere Drehmomentübertragung zu gewährleisten, kann vorgesehen sein, dass der erste Anschlussabschnitt einen Verzahnungsbereich aufweist, der zur Drehmomentübertragung mit einer Gegenverzahnung des ersten Wellenteils verbindbar ist. Der Verzahnungsbereich ist vorzugsweise in sich geschlossen, d.h. umlaufend, ausgebildet. Bevorzugt mündet die Kanalöffnung des Kugelkanals in den Verzahnungsbereich. Die Kanalöffnung kann zwischen Zähnen des Verzahnungsbereichs angeordnet sein oder einen Zahn oder mehrere Zähne des Verzahnungsbereichs zumindest teilweise durchbrechen.

Gemäß einer bevorzugten Ausführungsform ist vorgesehen, dass der Verzahnungsbereich eine insbesondere umlaufende Innenverzahnung und/oder eine insbesondere umlaufende Außenverzahnung aufweist. Die Verzahnung kann als Evolventenverzahnung ausgebildet sein. Die Verzahnung kann nach DIN 5480-1 (März 2006) ausgebildet sein.

Vorzugsweise ist der erste Anschlussabschnitt ringförmig ausgebildet.

Die eingangs erwähnte Aufgabe wird auch durch eine Wellenanordnung mit einem ersten Wellenteil und einem zweiten Wellenteil gelöst, welche über eine Verbindungsvorrichtung der oben beschriebenen Art miteinander lösbar miteinander verbunden sind. Der zweite Wellenteil kann mit der Verbindungsvorrichtung kraft- und/oder formschlüssig über den zweiten Anschlussabschnitt verbunden sein. Unter anderem kann der zweite Wellenteil mit der Verbindungsvorrichtung verschraubt sein. Bei dem zweiten Wellenteil kann es sich beispielsweise um eine Antriebswelle handeln. Bei dem ersten Wellenteil kann es sich zum Beispiel um eine Abtriebswelle, einen Anschlussflansch oder einen Wellenstummel handeln. Der erste und der zweite Wellenteil können auch als zwei getrennte Teile derselben Welle betrachtet werden, die über die Verbindungsvorrichtung miteinandcleanr verbunden sind. Der erste Anschlussabschnitt und der Gegenabschnitt können zur Drehmomentübertragung gemäß der Norm DIN 5480-1 (März 2006) über eine Zahnwellenverbindung verbunden sein.

Bevorzugt ist vorgesehen, dass der erste Anschlussabschnitt einen Verzahnungsbereich und der Gegenabschnitt des ersten Wellenteils einen Bereich mit einer Gegenverzahnung aufweist, wobei die Gegenverzahnung Zähne besitzt, die kürzer sind als die Zähne des Verzahnungsbereichs der Verbindungsvorrichtung.

Im Folgenden wird die Erfindung an Hand von Figuren beschrieben, auf die sie allerdings nicht beschränkt sein soll.
Fig. 1 zeigt eine Schrägansicht einer Wellenanordnung mit einem ersten und einem zweiten Wellenteil, die über eine Verbindungsvorrichtung lösbar miteinander verbunden sind;
Fig. 2 zeigt die Schrägansicht gemäß Fig. 1 mit einer aufgebrochenen Verbindungsvorrichtung;
Fig. 3 zeigt einen Teilbereich von Fig. 2 in vergrößerter Darstellung;
Fig. 4 zeigt eine teilweise geschnittene Seitenansicht der Verbindungsvorrichtung, wobei sich Blockierelemente in einer Freigabestellung befinden;
Fig. 5A, 5B zeigen jeweils eine Schnittansicht einer oberen Hälfte der Verbindungsvorrichtung; in Fig. 5A befinden sich Blockierelemente in der Blockierstellung und Sperrbolzen in der Fixierstellung; in Fig. 5B befinden sich Blockierelemente in der Freigabestellung und Sperrbolzen in der Auslösestellung;
Fig. 6 zeigt einen ersten und einen davon gelösten zweiten Wellenteil;
Fig. 7 zeigt schematisch einen Teilbereich von Fig. 6 in aufgeschnittener und vergrößerter Ansicht;
Fig. 8 zeigt eine Explosionsdarstellung der Verbindungsvorrichtung; und
Fig. 9 zeigt die Explosionsdarstellung aus Fig. 8 in Seitenansicht.

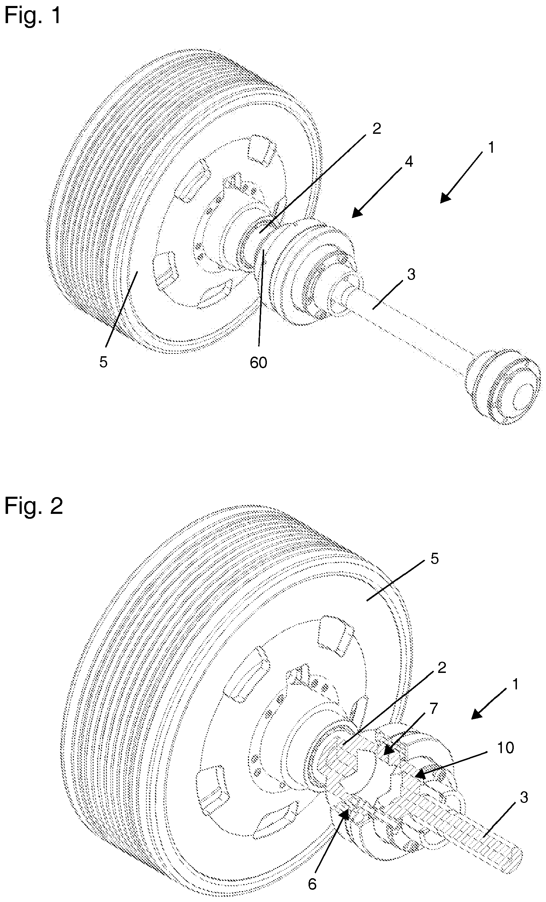

Fig. 1 zeigt eine Wellenanordnung 1 mit einem ersten Wellenteil 2 und einem zweiten Wellenteil 3. Die beiden Wellenteile 2, 3 sind über eine erfindungsgemäße Verbindungsvorrichtung 4 miteinander lösbar verbunden. In der gezeigten Darstellung ist der erste Wellenteil 2 als Anschlussflansch 60 ausgebildet und mit einem Prüfrad 5 eines Prüfstandes verbunden. Der erste Wellenteil 2 kann als Teil des Prüfrades 5 betrachtet werden. Der zweite Wellenteil 3 führt zu einer Belastungsmaschine (nicht gezeigt). Um das Prüfrad 5 bzw. den ersten Wellenteil 2 im Fehlerfall rasch vom zweiten Wellenteil 3 und damit von der Belastungsmaschine trennen zu können, sind die beiden Wellenteile 2, 3 über die Verbindungsvorrichtung 4 lösbar miteinander verbunden.

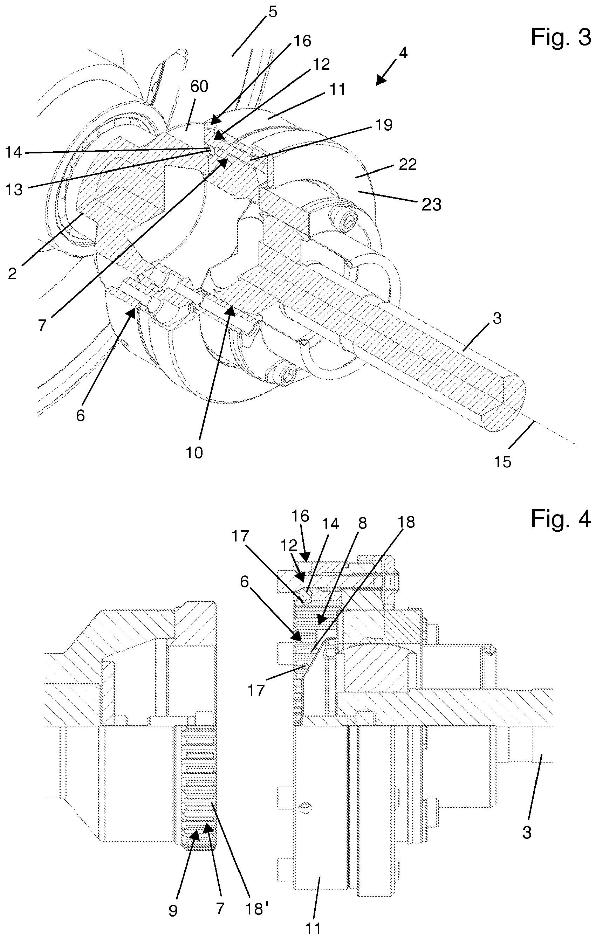

Fig. 2 zeigt eine vergrößerte und teilweise aufgeschnittene Darstellung der Verbindungsvorrichtung 4 und der beiden Wellenteile 2 und 3 gemäß Fig. 1. Zur Übertragung von Drehmoment ist die Verbindungsvorrichtung 4 über einen ersten Anschlussabschnitt 6 der Verbindungsvorrichtung 4 mit einem korrespondierenden Gegenabschnitt 7 des ersten Wellenteils 2 formschlüssig verbunden. Der Formschluss ist jedenfalls in Drehrichtung vorhanden. Zur formschlüssigen Verbindung des ersten Anschlussabschnitts 6 mit dem Gegenabschnitt 7 weist der erste Anschlussabschnitt 6 in der gezeigten Ausführungsform einen Verzahnungsbereich 8 und der Gegenabschnitt 7 eine entsprechende Gegenverzahnung 9, jeweils mit Zähnen 18 bzw. 18', auf (siehe beispielsweise Fig. 4). An der gegenüberliegenden Seite ist die Verbindungsvorrichtung 4 über einen zweiten Anschlussabschnitt 10 form- und/oder reibschlüssig mit dem zweiten Wellenteil 3 verbunden.

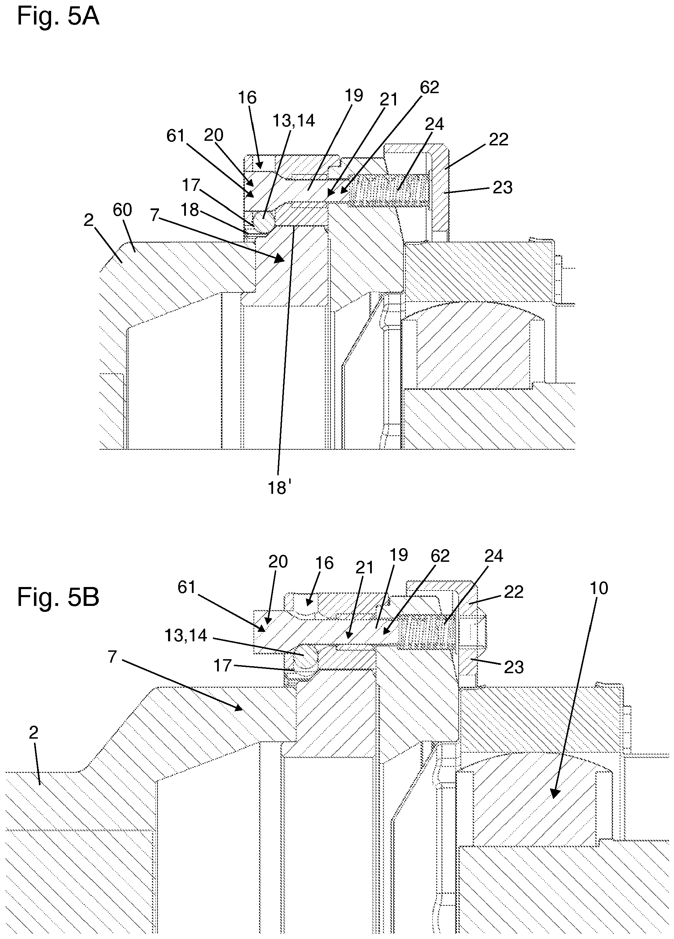

Fig. 3 zeigt eine vergrößerte Darstellung der Verbindungsvorrichtung 4 aus Fig. 2. Es ist erkennbar, dass der erste Anschlussabschnitt 6 als Anschlussring 11 ausgebildet ist. Um im Normalbetrieb ein unbeabsichtigtes Lösen der formschlüssigen Verbindung zwischen dem ersten Wellenteil 2 und der Verbindungsvorrichtung 4 zu verhindern, weist die Verbindungsvorrichtung 4 erfindungsgemäß einen Verriegelungsmechanismus 12 auf. Der Verriegelungsmechanismus 12 besitzt mehrere Blockierelemente 13, welche entlang des Umfangs des Anschlussrings 11 vorzugsweise regelmäßig beabstandet zueinander angeordnet sind. Erfindungsgemäß ist vorgesehen, dass die Blockierelemente 13 zwischen einer Blockierstellung (vgl. Fig. 5A), in welcher ein Lösen des Gegenabschnitts 7 von dem ersten Anschlussabschnitt 6 formschlüssig durch die Blockierelemente 13 verhindert wird, und einer Freigabestellung (vgl. Fig. 5B), in welcher der erste Anschlussabschnitt 6 von dem Gegenabschnitt 7 lösbar ist, überführbar sind. In der gezeigten Ausführungsform sind die Blockierelemente 13 durch Kugeln 14 gebildet. Die Kugeln 14 sind jeweils in einem eigenen, im Wesentlichen radial zur Drehachse 15 der Wellenanordnung 1 orientierten Kugelkanal 16 gelagert, welcher in dem Anschlussring 11 angeordnet sein kann. Um ein Lösen des Gegenabschnitts 7 vom ersten Anschlussabschnitt 6 zu verhindern, mündet jeder Kugelkanal 16 über eine Kanalöffnung 17 in den Verzahnungsbereich 8 der Verbindungsvorrichtung 4 (in Fig. 4 besser erkennbar). In der Blockierstellung, wie sie beispielsweise in Fig. 5A gezeigt ist, ragen die Kugeln 14 zumindest teilweise durch die Kanalöffnungen 17 in den Verzahnungsbereich 8 und verhindern dadurch formschlüssig ein Herausziehen des ersten Wellenteils 2 in axiale Richtung, d.h. parallel zur Drehachse 15, wenn der Gegenabschnitt 7 mit dem ersten Anschlussabschnitt 6 verbunden ist.

In Fig. 4 (und auch zum Teil in Fig. 5A und Fig. 5B) ist erkennbar, dass die Zähne 18' des Gegenabschnitts 7 kürzer sind als die Zähne 18 des ersten Anschlussabschnittes 6. Wenn der Gegenabschnitt 7 zur Gänze in den ersten Anschlussabschnitt 6 eingeschoben ist, befinden sich in der Blockierstellung die durch die Kanalöffnungen 17 ragenden Kugeln 14 in Richtung der Drehachse 15 betrachtet hinter den Zähnen 18' des Gegenabschnittes 7 auf der Seite des ersten Wellenteils 2 und blockieren somit ein Lösen der Zähne 18' des Gegenabschnitts 7 von den Zähnen 18 des ersten Anschlussabschnitts 6. Die Kugeln 14 können in der Blockierstellung teilweise an abgeflachten Stirnseiten der Zähne 18' des Gegenabschnitts 7 anliegen.

Der Verriegelungsmechanismus 12 trägt prinzipiell nicht zur Übertragung von Drehmomenten bei, sondern verhindert lediglich formschlüssig ein (unbeabsichtigtes) Trennen des ersten Wellenteils 2 von der Verbindungsvorrichtung 4. Die Kanalöffnungen 17 können zwischen Zähnen 18 des Verzahnungsbereichs 8 in den Verzahnungsbereich 8 münden. Es kann auch vorgesehen sein, dass die Kanalöffnungen 17 die Zähne 18 des Verzahnungsbereichs 8 teilweise durchbrechen. Jedenfalls ist in der gezeigten Ausführungsform vorgesehen, dass die Kugeln 14 in der Blockierstellung zumindest teilweise in den Verzahnungsbereich 8 ragen und dadurch wie oben beschrieben im verbundenen Zustand ein Lösen der Gegenverzahnung 9 verhindern. Um die Kugeln 14 gegen Herausfallen zu sichern, ist es günstig, wenn die Kanalöffnungen 17 einen kleineren Querschnitt aufweisen als die Kugeln 14.

Um die Blockierelemente 13 in der Blockierstellung zu sichern, ist für jedes Blockierelement 13 ein verschiebbarer Sperrbolzen 19 vorgesehen. Die dargestellten Sperrbolzen 19 weisen einen ersten Abschnitt 61 mit einem ersten Querschnitt 20 und einen zweiten Abschnitt 62 mit einem im Vergleich zum ersten Querschnitt kleineren zweiten Querschnitt 21 auf und können zwischen einer Fixierstellung (vgl. Fig. 5A) und einer Auslösestellung (vgl. Fig. 5B) verschoben werden. Die Sperrbolzen 19 ragen zumindest teilweise seitlich in die Kugelkanäle 16 bzw. durchdringen diese. In der Fixierstellung sichern die Sperrbolzen 19 die Kugeln 14 in der Blockierstellung. In der Fixierstellung ragen die Sperrbolzen 19 mit ihren ersten Abschnitten 61 in die jeweiligen Kugelkanäle 16. Dabei liegen die Sperrbolzen 19 mit dem ersten (dickeren) Abschnitt 61 an den Kugeln 14 an und klemmen diese zwischen den Kanalöffnungen 17 und dem Sperrbolzen 19 unverschieblich und formschlüssig ein. In dieser Stellung kann die formschlüssige Verbindung zur Drehmomentübertragung zwischen dem ersten Wellenteil 2 und der Verbindungsvorrichtung 4 nicht gelöst werden, da die Kugeln 14 ein Herausziehen des Gegenabschnitts 7 aus dem ersten Anschlussabschnitt 6 verhindern. Durch Betätigen eines Auslöseelements 22 können sämtliche Sperrbolzen 19 in die Auslösestellung gebracht werden. Dabei werden die Sperrbolzen 19 verschoben und teilweise aus dem Gehäuse der Verbindungsvorrichtung 4 gedrückt. In der Auslösestellung der Sperrbolzen 19 sind die Blockierelemente 13 bzw. Kugeln 14 nicht mehr unverschieblich eingeklemmt. In der Auslösestellung ist ein Trennen der formschlüssigen Verbindung zwischen dem Gegenabschnitt 7 und dem ersten Anschlussabschnitt 6 möglich. Wie in Fig. 5B erkennbar ist, ragen in der Auslösestellung die Sperrbolzen 19 nicht mehr mit ihren ersten Abschnitten 61 mit den ersten Querschnitten 20, sondern mit den zweiten Abschnitten 62 mit den (kleineren) zweiten Querschnitten 21 in die Kugelkanäle 16. Die Kugeln 14 können somit nach oben geschoben werden. Dies kann beispielsweise durch Herausziehen des ersten Wellenteils 2 erfolgen, wodurch in der gezeigten Ausführungsform durch die abgeflachten Stirnseiten der Zähne 18' des Gegenabschnitts 7 die Kugeln 14 im Kugelkanal 16 nach außen, d.h. weg von der Drehachse 15, verschoben werden.

In der gezeigten Ausführungsform ist das Auslöseelement 22 ein ringförmiges Betätigungselement 23, das mit sämtlichen Sperrbolzen 19 verbunden ist. Das Betätigungselement 23 ist um die Drehachse 15 angeordnet und wird mit Hilfe zumindest einer Rückstellfeder 24 in einer Position gehalten, in welcher sich die Sperrbolzen 19 in der Fixierstellung befinden. Die Rückstellfeder 24 ist in der gezeigten Darstellung konzentrisch um einen Sperrbolzen 19 angeordnet (und umgibt diesen zumindest teilweise). Im Falle von mehreren Rückstellfedern 24 können diese jeweils konzentrisch um einen Sperrbolzen 19 angeordnet sein. Durch Betätigen des Betätigungselements 23 und Überwinden der Federkraft können sämtliche Sperrbolzen 19 in die Auslösestellung gebracht werden. Das Betätigungselement 23 kann manuell oder mittels eines elektrischen Auslösemechanismus (nicht dargestellt) ausgelöst werden.

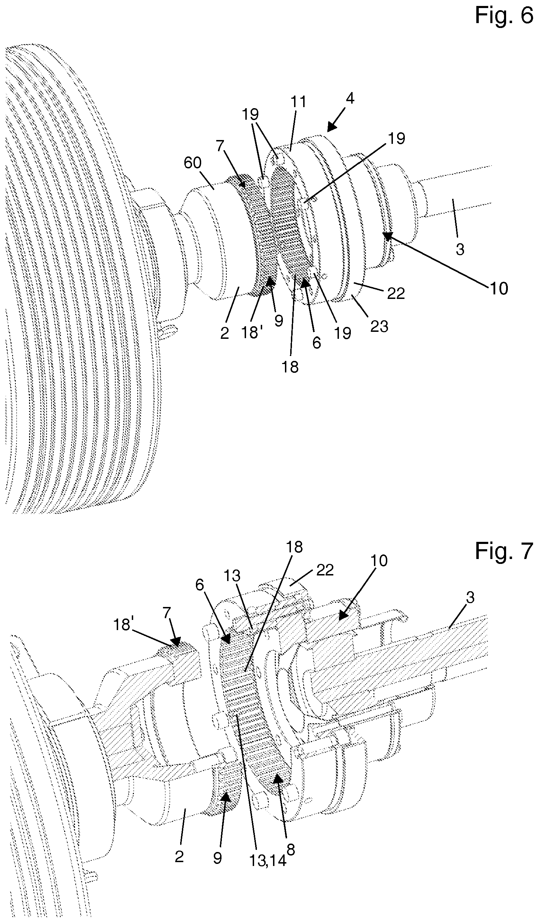

Fig. 6 zeigt eine Darstellung, in welcher der erste Wellenteil 2 und die Verbindungsvorrichtung 4 voneinander getrennt sind. Das Auslöseelement 22 bzw. das Betätigungselement 23 ist dabei betätigt, wodurch die Sperrbolzen 19 sich in der Auslösestellung befinden. In dieser Stellung kann der Gegenabschnitt 7 des ersten Wellenteils mit dem ersten Anschlussabschnitt 6 verbunden werden. Wenn das Auslöseelement 22 nach Verbinden des Gegenabschnitts 7 mit dem ersten Anschlussabschnitt 6 losgelassen wird und das Auslöseelement 22 auf Grund der durch die Rückstellfedern 24 erzeugten Federkraft zurück in die Ausgangsstellung gebracht wird, werden die Sperrbolzen 19 in die Fixierstellung überführt und die Blockierelemente 13 in der Blockierstellung fixiert. Ein Lösen des Gegenabschnitts 7 vom ersten Anschlussabschnitt ist dann ohne Betätigung des Auslöseelements 22 nicht mehr möglich. Mit anderen Worten wird durch Betätigen des Auslöseelements 22 ein Verbinden und Trennen des Gegenabschnitts 7 mit dem ersten Anschlussabschnitt 6 ermöglicht.

Fig. 7 zeigt die Darstellung von Fig. 6 in einer vergrößerten und teilweise aufgebrochenen Darstellung.

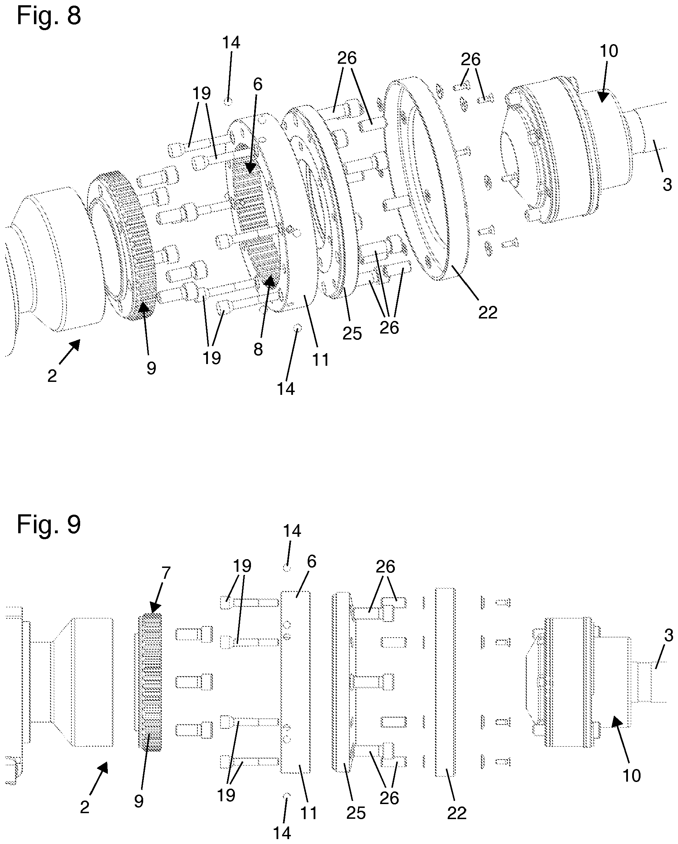

Figuren 8 und 9 zeigen Explosionsdarstellungen der erfindungsgemäßen Verbindungsvorrichtung 4, wobei erkennbar ist, dass der erste Anschlussabschnitt 6 als Anschlussring 11 ausgebildet ist. An den Anschlussring 11 ist (im verbundenen Zustand) ein weiteres Ringelement 25 als Zwischenelement, das Auslöseelement 22 und der zweite Anschlussabschnitt 10 angefügt. Die beiden Anschlussabschnitte 6, 10 und das Ringelement 25 sind mittels Verbindungsmittel 26, insbesondere Schrauben und Bolzen, miteinander verbunden.

## Patentansprüche

1. Verbindungsvorrichtung (4) zur Verbindung von mechanischen Wellenteilen (2,3), aufweisend einen ersten Anschlussabschnitt (6) zur Verbindung mit einem ersten Wellenteil (2) und einen zweiten Anschlussabschnitt (10) zur Verbindung mit einem zweiten Wellenteil (3), wobei der erste Anschlussabschnitt (6) zur Drehmomentübertragung formschlüssig mit einem Gegenabschnitt (7) des ersten Wellenteils (2) verbindbar ist, wobei an der Verbindungsvorrichtung (4) ein von der Drehmomentübertragung vorzugsweise funktionell unabhängiger Verriegelungsmechanismus (12) mit mehreren verschieblichen Blockierelementen (13) vorgesehen ist, welche zwischen einer Freigabestellung, in welcher der erste Anschlussabschnitt (6) von dem Gegenabschnitt (7) lösbar ist, und einer Blockierstellung, in welcher ein Lösen des Gegenabschnitts (7) von dem ersten Anschlussabschnitt (6) formschlüssig durch die Blockierelemente (13) verhindert wird, überführbar sind, wobei der Verriegelungsmechanismus (12) mehrere verschiebbare Sperrbolzen (19) aufweist, welche in einer Fixierstellung die Blockierelemente (13) in der Blockierstellung sichern und in einer Auslösestellung ein Überführen der Blockierelemente (13) in die Freigabestellung erlauben, wobei jedem Blockierelement (13) ein eigener Sperrbolzen (19) zugeordnet ist, **dadurch gekennzeichnet, dass** der Verriegelungsmechanismus (12) ein Auslöseelement (22) aufweist, durch dessen Betätigung alle Sperrbolzen (19) von der Fixierstellung in die Auslösestellung überführbar sind, wobei die Sperrbolzen (19) mit dem Auslöseelement (22) verbunden sind.

2. Verbindungsvorrichtung (4) nach Anspruch 1, **dadurch gekennzeichnet, dass** die Blockierelemente (13) jeweils durch eine Kugel (14) gebildet sind, welche jeweils in einem eigenen, vorzugsweise im Wesentlichen radial zur Drehachse (15) angeordneten Kugelkanal (16) gelagert ist.

3. Verbindungsvorrichtung (4) nach Anspruch 2, **dadurch gekennzeichnet, dass** der erste Anschlussabschnitt (6) einen Verzahnungsbereich (8) aufweist und die Kugelkanäle (16) über Kanalöffnungen (17) in den Verzahnungsbereich (8) münden, vorzugsweise wobei die Kanalöffnungen (17) einen kleineren Querschnitt als die Kugeln (14) aufweisen.

4. Verbindungsvorrichtung (4) nach Anspruch 3, **dadurch gekennzeichnet, dass** die Kugeln (14) in der Blockierstellung zumindest teilweise durch die Kanalöffnungen (17) ragen.

5. Verbindungsvorrichtung (4) nach einem der Ansprüche 2 bis 4, **dadurch gekennzeichnet, dass** die Sperrbolzen (19) in die Kugelkanäle (16) hineinragen, insbesondere diese durchdringen, und in der Fixierstellung die Kugeln (14) in der Blockierstellung sichern.

6. Verbindungsvorrichtung (4) nach Anspruch 4 oder 5, **dadurch gekennzeichnet, dass** die Sperrbolzen (19) zumindest einen ersten Abschnitt (61) mit einem ersten Querschnitt (20) und zumindest einen zweiten Abschnitt (62) mit einem im Vergleich zum ersten Querschnitt (20) kleineren zweiten Querschnitt (21) aufweisen, wobei in der Fixierstellung die Sperrbolzen (19) zumindest mit dem ersten Abschnitt (61) in die Kugelkanäle (16) ragen und die Kugeln (14) in der Blockierstellung sichern.

7. Verbindungsvorrichtung (4) nach einem der Ansprüche 1 bis 6, **dadurch gekennzeichnet, dass** das Auslöseelement (22) ein ringförmiges Betätigungselement (23) ist.

8. Verbindungsvorrichtung (4) nach Anspruch 7, **dadurch gekennzeichnet, dass** zwei oder zumindest drei, insbesondere im Wesentlichen regelmäßig um die Drehachse (15) angeordnete Blockierelemente (13) und dazu jeweils korrespondierende Sperrbolzen (19) vorgesehen sind, welche in einer Fixierstellung jeweils das korrespondierende Blockierelement (13) in der Blockierstellung sichern und in einer Auslösestellung ein Überführen des jeweils korrespondierenden Blockierelements (13) in die Freigabestellung ermöglichen, wobei die Sperrbolzen (19) durch ein um die Drehachse (15) angeordnetes ringförmiges Betätigungselement (23) von der Fixierstellung in die Auslösestellung überführbar sind.

9. Verbindungsvorrichtung (4) nach Anspruch einem der Ansprüche 1 bis 8, **dadurch gekennzeichnet, dass** der erste Anschlussabschnitt (6) einen Verzahnungsbereich (8) aufweist, der zur Drehmomentübertragung mit einer Gegenverzahnung (9) des ersten Wellenteils (2) verbindbar ist.

10. Verbindungsvorrichtung (4) nach Anspruch 9, **dadurch gekennzeichnet, dass** der Verzahnungsbereich (8) eine insbesondere umlaufende Innenverzahnung und/oder eine insbesondere umlaufende Außenverzahnung aufweist.

11. Verbindungsvorrichtung (4) nach einem der Ansprüche 1 bis 10, **dadurch gekennzeichnet, dass** der erste Anschlussabschnitt (6) ringförmig ist.

12. Wellenanordnung (1) mit einem ersten Wellenteil (2) und einem zweiten Wellenteil (3), welche über eine Verbindungsvorrichtung (4) miteinander lösbar miteinander verbunden sind, **dadurch gekennzeichnet, dass** die Verbindungsvorrichtung (4) nach einem der Ansprüche 1 bis 11 ausgebildet ist.

13. Wellenanordnung (1) nach Anspruch 12, **dadurch gekennzeichnet, dass** der erste Anschlussabschnitt (6) einen Verzahnungsbereich (8) und der Gegenabschnitt (9) des ersten Wellenteils (2) einen Bereich mit einer Gegenverzahnung (9) aufweist, wobei die Gegenverzahnung (9) Zähne (18') besitzt, die kürzer sind als die Zähne (18) des Verzahnungsbereichs (8) der Verbindungsvorrichtung (4).

## Claims

1. A connecting device (4) for the connection of mechanical shaft parts (2, 3), having a first connector section (6) for connection to a first shaft part (2) and a second connector section (10) for connection to a second shaft part (3), wherein the first connector section (6) is connectable in a positively locking manner to a mating section (7) of the first shaft part (2) for the transmission of torque, wherein a locking mechanism (12), which is preferably functionally independent of the transmission of torque, is provided on the connecting device (4), said locking mechanism having multiple displaceable blocking elements (13), which are transferable between a release position, in which the first connector section (6) is releasable from the mating section (7), and a blocking position, in which a release of the mating section (7) from the first connector section (6) is prevented in a positively locking manner by the blocking elements (13), wherein the locking mechanism (12) has multiple displaceable locking pins (19) which, in a fixing position, secure the blocking elements (13) in the blocking position, and, in a tripped position, permit a transfer of the blocking elements (13) into the release position, wherein a separate locking pin (19) is assigned to each blocking element (13), **characterized in that** the locking element (12) has a trip element (22), due to whose actuation all locking pins (19) are transferable from the fixing position into the tripped position, wherein the locking pins (19) are connected to the trip element (22).

2. The connecting device (4) according to claim 1, **characterized in that** each of the blocking elements (13) is formed by a ball (14) which is stored in an own respective ball channel which is (16) arranged preferably substantially radially to the axis of rotation (15).

3. The connecting device (4) according to claim 2, **characterized in that** the first connector section (6) has a toothing region (8) and the ball channels (16) open into the toothing region (8) via channel openings (17), wherein the channel openings (17) preferably have a smaller cross section than the balls (14).

4. The connecting device (4) according to claim 3, **characterized in that**, in the blocking position, the balls (14) project at least partially through the channel openings (17).

5. The connecting device (4) according to one of claims 2 to 4, **characterized in that** the locking pins (19) project into the ball channels (16) in particular cross the same, and, in the fixing position, secure the balls (14) in the blocking position.

6. The connecting device (4) according to claim 4 or 5, **characterized in that** the locking pins (19) have at least one first section (61) with a first cross section (20) and at least one second section (62) with a second cross section (21), the second cross section (21) being smaller in comparison to the first cross section (20), wherein, in the fixing position, the locking pins (19) project with at least the first section (61) into the ball channels (16) and secure the balls (14) in the blocking position.

7. The connecting device (4) according to one of claims 1 to 6, **characterized in that** the trip element (22) is an annular actuating element (23).

8. The connecting device (4) according to claim 7, **characterized in that** two or at least three blocking elements (13) are arranged substantially regularly about the axis of rotation (15) and that respectively corresponding locking pins (19) are provided, said locking pins (19), in a fixing position, respectively secure the corresponding blocking element (13) in the blocking position, and, in a tripped position, permit a transfer of the respectively corresponding blocking element (13) into the release position, wherein the locking pins (19) are transferable from the fixing position into the tripped position by an annular actuating element (23) arranged about the axis of rotation (15).

9. The connecting device (4) according to one of claims 1 to 8, **characterized in that** the first connector section (6) has a toothing region (8) which is connectable to a counter toothing (9) of the first shaft part (2) for the transmission of torque.

10. The connecting device (4) according to claim 9, **characterized in that** the toothing region (8) has an in particular circumferential internal toothing and/or an in particular circumferential external toothing.

11. The connecting device (4) according to one of claims 1 to 10, **characterized in that** the first connector section (6) is annular.

12. A shaft arrangement (1) with a first shaft part (2) and a second shaft part (3), which are releasably connected to each other via a connecting device (4), **characterized in that** the connecting device (4) is designed according to one of claims 1 to 11.

13. The shaft arrangement (1) according to claim 12, **characterized in that** the first connector section (6) has a toothing region (8) and the mating section (9) of the first shaft part (2) has an area with a counter toothing (9), wherein the counter toothing (9) comprises teeth (18') which are shorter than the teeth (18) of the toothing region (8) of the connecting device (4).

## Revendications

1. Dispositif de liaison (4) pour la liaison de parties d'arbre mécaniques (2, 3), comportant une première section de raccordement (6) pour la liaison avec une première partie d'arbre (2) et une deuxième section de raccordement (10) pour la liaison avec une deuxième partie d'arbre (3), où la première section de raccordement (6) peut être reliée par assemblage de forme avec une contre-section (7) de la première partie d'arbre (2) pour la transmission du couple de rotation, où au niveau du dispositif de liaison (4) il est prévu un mécanisme de verrouillage (12) de préférence fonctionnellement indépendant de la transmission du couple de rotation avec plusieurs éléments de blocage déplaçables (13), qui peuvent être amenés à passer d'une position de libération dans laquelle la première section de raccordement (6) peut être séparée de la contre-section (7), et une position de blocage dans laquelle une séparation de la contre-section (7) de la première section de raccordement (6) est empêchée par assemblage de forme par les éléments de blocage (13), où le mécanisme de verrouillage (12) comporte plusieurs goupilles de verrouillage (19) déplaçables qui, dans une position de fixation, maintiennent les éléments de blocage (13) dans la position de blocage et dans une position de déclenchement permettent un passage des éléments de blocage (13) dans la position de libération, où à chaque élément de blocage (13) est associée une goupille de verrouillage (19) propre, **caractérisé en ce que** le mécanisme de verrouillage (12) comporte un élément de déclenchement (22) par l'actionnement duquel toutes les goupilles de verrouillage (19) peuvent être amenées à passer de la position de fixation à la position de déclenchement, où les goupilles de verrouillage (19) sont reliées à l'élément de déclenchement (22).

2. Dispositif de liaison (4) selon la revendication 1, **caractérisé en ce que** les éléments de blocage (13) sont formés chacun par une bille (14) qui est logée à chaque fois dans un canal à bille (16) propre agencé de préférence sensiblement radialement par rapport à l'axe de rotation (15).

3. Dispositif de liaison (4) selon la revendication 2, **caractérisé en ce que** la première section de raccordement (6) comporte un domaine de denture (8) et les canaux à bille (16) débouchent par l'intermédiaire d'ouvertures de canal (17) dans le domaine de denture (8), de préférence où les ouvertures de canal (17) comportent une section transversale plus petite que les billes (14).

4. Dispositif de liaison (4) selon la revendication 3, **caractérisé en ce que** les billes (14) dépassent dans la position de blocage au moins partiellement à travers les ouvertures de canal (17).

5. Dispositif de liaison (4) selon l'une des revendications 2 à 4, **caractérisé en ce que** les goupilles de verrouillage (19) pénètrent dans les canaux à bille (16), en particulier les traversent, et, dans la position de fixation, maintiennent les billes (14) dans la position de blocage.

6. Dispositif de liaison (4) selon la revendication 4 ou 5, **caractérisé en ce que** les goupilles de verrouillage (19) comportent au moins une première section (61) avec une première section transversale (20) et au moins une deuxième section (62) avec une deuxième section transversale (21) plus petite que la première section transversale (20), où dans la position de fixation, les goupilles de verrouillage (19) pénètrent au moins avec la première section (61) dans les canaux à bille (16) et maintiennent les billes (14) dans la position de blocage.

7. Dispositif de liaison (4) selon l'une des revendications 1 à 6, **caractérisé en ce que** l'élément de déclenchement (22) est un élément d'actionnement en forme d'anneau (23).

8. Dispositif de liaison (4) selon la revendication 7, **caractérisé en ce qu'**il est prévu deux ou au moins trois éléments de blocage (13) agencés en particulier sensiblement régulièrement autour de l'axe de rotation (15) et des goupilles de verrouillage (19) correspondant à chacun de ceux-ci, qui, dans une position de fixation, maintiennent à chaque fois l'élément de blocage (13) correspondant dans la position de blocage et, dans une position de déclenchement, permettent un passage de l'élément de blocage (13) correspondant à chaque fois dans la position de libération, où les goupilles de verrouillage (19) peuvent être amenées à passer de la position de fixation dans la position de déclenchement par un élément d'actionnement annulaire (23) agencé autour de l'axe de rotation (15).

9. Dispositif de liaison (4) selon la revendication l'une des revendications 1 à 8, **caractérisé en ce que** la première section de raccordement (6) comporte un domaine de denture (8) qui peut être relié à une contre-denture (9) de la première partie d'arbre (2) pour la transmission du couple de rotation.

10. Dispositif de liaison (4) selon la revendication 9, **caractérisé en ce que** le domaine de denture (8) comporte une denture interne en particulier circonférentielle et/ou une denture externe en particulier circonférentielle.

11. Dispositif de liaison (4) selon l'une des revendications 1 à 10, **caractérisé en ce que** la première section de raccordement (6) est annulaire.

12. Agencement d'arbre (1) avec une première partie d'arbre (2) et une deuxième partie d'arbre (3), qui sont reliées l'une à l'autre de manière amovible par l'intermédiaire d'un dispositif de liaison (4), **caractérisé en ce que** le dispositif de liaison (4) est agencé selon l'une des revendications 1 à 11.

13. Agencement d'arbre (1) selon la revendication 12, **caractérisé en ce que** la première section de raccordement (6) comporte un domaine de denture (8) et la contre-section (9) de la première partie d'arbre (2) comporte un domaine avec une contre-denture (9), où la contre-denture (9) possède des dents (18') qui sont plus courtes que les dents (18) du domaine de denture (8) du dispositif de liaison (4).
